# EUROPEAN PATENT SPECIFICATION

(11) **EP 4 488 785 B1**
(45) Date of publication and mention of the grant of the patent: **18.02.2026**
(21) Application number: 24185394.4
(22) Date of filing: 28.06.2024
(51) Int. Cl.: B66C 19/00, B66F 9/06, B66F 9/075, G05D 1/244, G05D 1/661, G05D 105/28, G05D 107/70, G05D 109/10, G05D 111/10

(54) **AUTONOMOUS OR ASSISTED DRIVING OF AN INDUSTRIAL TRUCK USING THE DETECTION OF A PLURALITY OF MARKERS**
AUTONOMES ODER UNTERSTÜTZTES FAHREN EINES FLURFÖRDERZEUGS UNTER VERWENDUNG DER ERKENNUNG MEHRERER MARKER
CONDUITE AUTONOME OU ASSISTÉE D'UN CHARIOT DE MANUTENTION À L'AIDE DE LA DÉTECTION D'UNE PLURALITÉ DE REPÈRES

(30) Priority: 03.07.2023 IT 202300013794
(43) Date of publication of application: 08.01.2025
(73) Proprietor: Toyota Material Handling Manufacturing Italy S.p.A, 40132 Bologna (IT)
(72) Inventor: CAMPISI, Andrea, 40132 Bologna (BO) (IT); INFANTINO, Vincenzo, 40132 Bologna (BO) (IT); MASTROIANNI, Francesco, 40132 Bologna (BO) (IT)
(74) Representative: Hoffmann Eitle

(56) References cited:
- US-A1- 2017 105 592
- US-A1- 2021 309 501
- US-A1- 2022 047 138

## Description

### Technical field

Some example aspects of the present document relate to autonomous or assisted driving of an industrial truck and, in particular, a system for autonomous or assisted driving of an industrial truck, an industrial truck, a method, a computer program and a controller.

### State of the art

Industrial trucks, such as, for example, lift trucks, trailers, dollies, sack trucks, manual lift trucks and so on, handle and transport materials or loads in an industrial environment, such as a warehouse. Industrial trucks can have an autonomous driving function that enables the truck to navigate in the industrial environment without being manoeuvred by a person, and/or an assisted driving function that provides indications to the human operator of the truck to correct the truck's operation or to automatically adjust the truck's operation.

For the purpose of performing an autonomous driving or assisted driving function, the information relating to the truck's position in the industrial environment must be accurate to ensure that the industrial truck interacts appropriately with other elements in the industrial environment and that the risks of collision are reduced. Known systems for obtaining information on position include LIDAR sensors (optical radar, "Light Detection and Ranging"), satellite navigation receivers such as GNSS ("Global Navigational Satellite System") receivers or IMUs ("Inertial Measurement Units"). Based on the position information collected, the system generates a control signal in order to perform the autonomous/assisted driving function, for example by ensuring that a visual and/or audible indication (for example by means of a display device, lights and/or loudspeakers) is provided to the operator, or by automatically controlling the truck's movement.

When a loading or unloading operation is performed, the position of the industrial truck must be extremely precise so as to ensure a correct positioning of the industrial truck with respect to a loading/unloading apparatus included in the warehouse, at the industrial site or the like. The loading/unloading apparatus can be, for example, a crane, a gantry crane, a rubber-tyred self-propelled crane, a shelving unit, mobile shelving or the like. Normal navigation systems based, for example, on GNSS are not able to ensure a sufficiently precise positioning of an industrial truck with respect to the loading/unloading apparatus, which is necessary during loading/unloading operations. Furthermore, since the loading/unloading apparatus may be mobile, it is difficult for the known navigation systems to determine, in any circumstance, the correct target position with respect to the loading/unloading apparatus so as to perform the loading/unloading operations in cooperation with the loading/unloading apparatus.

US 2022/0047138 A1 discloses systems, devices, and methods for docking a mobile robot to a dock using distinct visual fiducial markers on the dock. A mobile robot system is provided that includes a dock and a mobile cleaning robot. The dock includes a first fiducial marker in a first plane on the dock and second one or more fiducial markers in a second plane different from the first plane. The mobile cleaning robot includes a visual system to detect the first and the second one or more fiducial markers, and a controller circuit to recognize the dock, and to determine a pose or heading direction of the mobile cleaning robot based on the detected first and the second one or more fiducial markers. The mobile drive system can adjust its heading direction, and drive to the dock according to the adjusted heading direction.

US 2017/0105592 A1 discloses a mobile robot system that includes a docking station having at least two pose-defining fiducial markers. The pose-defining fiducial markers have a predetermined spatial relationship with respect to one another and/or to a reference point on the docking station such that a docking path to the base station can be determined from one or more observations of the at least two pose-defining fiducial markers. A mobile robot in the system includes a pose sensor assembly. A controller is located on the chassis and is configured to analyze an output signal from the pose sensor assembly. The controller is configured to determine a docking station pose, to locate the docking station pose on a map of a surface traversed by the mobile robot and to path plan a docking trajectory.

US 2021/0309501 A1 discloses a control device which includes a route acquisition unit configured to acquire a route of a movable body for moving a plurality of aligned target objects to or from a target position at which the target objects are to be picked up or dropped, a reference position/posture acquisition unit configured to acquire information on a route at which the movable body picks up or drops a first target object at the target position, and an information output unit configured to output the information acquired by the route acquisition unit to the movable body, in which the route acquisition unit acquires routes of the movable body for moving second and subsequent target objects, based on the information acquired by the reference position/posture acquisition unit.

### Summary of the invention

Thus, there exists a need to improve the autonomous/assisted driving function of an industrial truck so as reliably obtain a precise, correct position of the industrial truck with respect to a loading/unloading apparatus in different circumstances.

In the light of the above objective, according to a first example aspect in this context, there is provided an industrial truck configured to carry a load and having an autonomous/assisted driving function for approaching an apparatus configured to interact with the industrial truck to perform operations of loading/unloading the truck, the industrial truck comprising:
- a control unit configured to control the autonomous/assisted driving function;
- at least one video camera configured to capture images of an environment of the industrial truck, the at least one video camera being connected to the control unit to provide the control unit with an image signal related to the captured images;

characterized in that the control unit is configured to detect, based on the image signal, at least two optical markers in the environment spaced apart from each other and included simultaneously in an image captured by the video camera, wherein the control unit is configured to determine a relative position of the industrial truck with respect to each of the optical markers detected based on the image signal,
wherein the control unit is further configured to acquire information relating to the optical markers, the information defining a target position, with respect to at least one of the optical markers, that the industrial truck must reach to perform the loading/unloading operations, wherein the control unit is further configured to control the autonomous/assisted driving function based on the determined relative position of the industrial truck with respect to the detected optical markers and on the information relating to the optical markers, in order to reach the target position. In one embodiment, the information relating to optical markers defines a target position, with respect to each of the optical markers, that the industrial truck must reach to perform the loading/unloading operations. In one embodiment, the control unit is configured to bring about a movement of the industrial truck that is necessary to reach the target position based on the detection of the optical markers. The movement can be defined with a vector, i.e. as a distance and an orientation.

Since the industrial truck can detect its relative position with respect to a plurality of optical markers by means of the video camera and can acquire the information relating to the markers defining a target position, with respect to the optical markers, that the industrial truck must reach, it is possible for the industrial truck to precisely determine and reach a target position, based on the detection of the markers, in order to perform the loading/unloading operations. In particular, the markers can be applied to (or associated with) a portion of the apparatus configured to interact with the industrial truck to load/unload the truck (hereinafter also "loading/unloading apparatus"). The target position is a position in which the loading/unloading apparatus and the industrial truck can interact to perform an operation of loading/unloading the industrial truck. The information relating to the markers defining a target position, with respect to the optical markers, that the industrial truck must reach are set in accordance with the configuration of the loading/unloading apparatus to which the optical marker is applied (or with which it is associated).

The information relating to the marker can be set also taking account of other circumstances related to the operation of the industrial truck and/or to the environment in which the loading/unloading apparatus is located. Furthermore, since a number of optical markers are applied in the environment and the industrial truck is configured to detect at least two optical markers, the control of the truck and the estimation of the target position are particularly robust; when one of the optical markers is not within view for any reason, the target position can in any case be estimated based on another optical marker of the plurality of optical markers; the reaching of the target position can thus be more reliably ensured. In particular, the control unit is configured to detect a plurality of optical markers in an image captured at a certain instant, i.e. in a video frame captured by the video camera.

According to one aspect, the information relating to the optical marker is encoded in at least one of, or all of, the optical markers, wherein the control unit is configured to extract the information from the image signal representing the optical markers as provided by the video camera. Every optical marker can include information relating to itself.

According to one aspect, the information relating to the optical markers includes an indication of a predetermined loading/unloading position in which the industrial truck can interact with the apparatus to perform operations of loading/unloading the industrial truck, the predetermined loading/unloading position being indicated with respect to at least one of, or all of, the at least two optical markers.

According to one aspect, the information relating to the optical markers includes an indication of a mutual position of one of the at least two optical markers with respect to another of the at least two optical markers. In such a case, one marker can be defined a "master" and the information relating to the "master" marker indicates a target position to be reached with the industrial truck with respect to the "master" marker. A marker other than the "master" marker can be defined as a "friend" marker and the information relating to the "friend" marker indicates a position of the "friend" marker with respect to the "master" marker.

According to one aspect, the information relating to the optical markers may be one of the following:
- an indication that the target position to be reached by the industrial truck is located in an area below at least one of, or all of, the optical markers, or
- an indication that the target position to be reached by the industrial truck is a position in a predetermined area and at a distance from at least one of, or all of, the optical markers in a horizontal direction.

According to one aspect, the control unit is configured to perform, based on the image signal provided by the video camera, an object recognition function to recognize at least a part of the apparatus configured to interact with the industrial truck to load and unload the truck, wherein the control unit is configured to preferentially attempt to detect the optical markers in a portion of the image captured by the video camera that is determined based on the recognition of at least the part of the apparatus by means of the object recognition function.

According to one aspect, the industrial truck comprises at least two video cameras, each configured to capture images of an environment of the industrial truck, and each being connected to the control unit to provide the control unit with a respective image signal related to the captured images; wherein the at least two video cameras have respective fields of view that overlap with each other so as to be able to capture a same optical marker simultaneously;
wherein the control unit is configured to detect, jointly based on each of the image signals, the at least two optical markers in the environment.

According to one aspect, when one or more optical markers are not viewable by the video camera, the control unit is configured to estimate a movement of the industrial truck that is necessary to reach the target position based on the detection of a number of optical markers that is less than the total number of the at least two optical markers.

According to one aspect, the control unit is configured to estimate the movement of the industrial truck that is necessary to reach the target position based on visual odometry and/or based on an input from an inertial measurement unit, IMU, when all the optical markers are not viewable by the video camera. For example, the control unit can include a visual odometry module that determines a relative position of the industrial truck with respect to a reference position; the reference position can correspond to the last position of the industrial truck determined based on an optical marker. The visual odometry module and/or the data generated by the IMU can be used jointly with the detection of the optical markers to determine the movement of the industrial truck that is necessary to reach the target position. This enables a more robust estimation of the movement for reaching the target position and, therefore, improved control of the autonomous and/or assisted driving.

According to one aspect, there is provided a system that includes the industrial truck according to one of the preceding aspects and an apparatus configured to interact with the industrial truck in order to load and unload the industrial truck, wherein the at least two optical markers are associated with (or fixed to) the apparatus.

According to one aspect, the apparatus is movable; each of the at least two optical markers can be fixed to the apparatus with a predetermined mutual spatial relationship.

According to one aspect, the apparatus includes a fixed part that is fixed during the loading/unloading of the industrial truck and a movable part that is movably connected to the fixed part, the movable part being configured to load or unload the industrial truck, wherein at least some of the optical markers are positioned on the fixed part and/or on the movable part of the apparatus.

According to one aspect, there is provided a method for performing an autonomous/assisted driving function of an industrial truck for approaching an apparatus configured to interact with the industrial truck to perform operations of loading/unloading the industrial truck, comprising:
- capturing, by means of at least one video camera of the industrial truck, images of an environment of the industrial truck,
- generating an image signal related to the captured images;
- detecting, based on the image signal, a plurality of optical markers in the environment,
- determining a relative position of the industrial truck with respect to at least one of, or all of, the optical markers detected based on the image signal,
- acquiring information relating to at least one of, or all of, the optical markers, the information defining a target position, with respect to at least one optical marker, that the industrial truck must reach to perform the loading/unloading operations,
- controlling the autonomous/assisted driving function based on the determined relative position of the industrial truck with respect to the detected optical marker and on the information relating to at least one optical marker, in order to reach the target position.

The present disclosure also provides an apparatus configured to interact with an industrial truck to load and unload the industrial truck, the apparatus being self-propelled and comprising a plurality of optical markers applied to an external surface of the apparatus and spaced apart from each other,
wherein said optical markers are configured to be simultaneously viewable from a single observation point and to be detected by a video camera of the industrial truck to enable the industrial truck to reach a target position with respect to the optical markers, and
wherein, when the truck is in the target position, the apparatus is configured to perform an operation of loading/unloading the industrial truck.

According to a further aspect, the apparatus includes a first part intended to be fixed during the loading/unloading of the industrial truck and a movable part that is movably connected to the first part, the movable part being configured to load or unload the industrial truck, wherein the plurality of optical markers are fixed to the first part

### Brief description of the drawings

The above-mentioned advantages and other advantages of the present invention will be illustrated with reference to example embodiments of the invention, described with reference to the appended drawings listed below.
Fig. 1 shows a view of an industrial truck according to the invention, in a position ready to interact with a loading/unloading apparatus;
fig. 2 shows examples of industrial trucks according to the invention;
fig. 3 shows a schematic view of components of the industrial truck;
fig. 4 shows an arrangement of the optical markers on the loading/unloading apparatus;
fig. 5 shows a different arrangement of the optical markers on the loading/unloading apparatus;
fig. 6 shows a schematic view of logic modules of the control unit;
fig. 7 shows an industrial truck advancing in the direction of the loading/unloading apparatus;
fig. 8 shows the steps of the operations performed by the industrial truck according to one embodiment;
fig. 9 shows the steps of a method carried out by the industrial truck according to the present disclosure;
fig. 10 shows a schematic view of a possible implementation of the control unit of the industrial truck;
fig. 11 shows an example of a loading/unloading apparatus provided with a plurality of optical markers;
fig. 12 shows an example of a multi-cam and multi-marker application.

### Detailed description

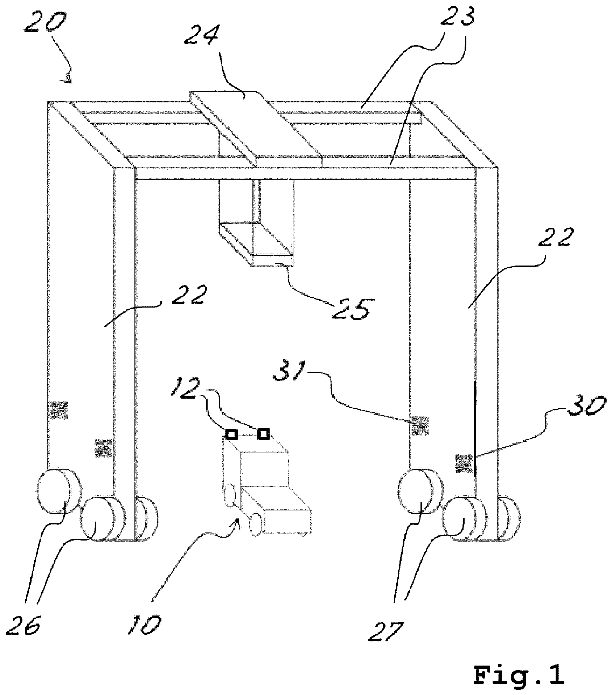

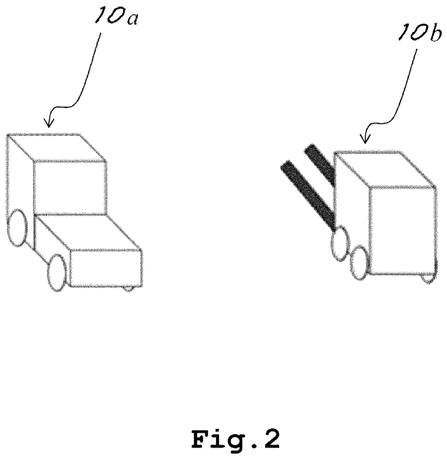

Fig. 1 shows an industrial truck 10 and an apparatus 20 (hereinafter also loading/unloading apparatus) configured to interact with the industrial truck for operations of loading/unloading the industrial truck. The industrial truck 10 can be of any known type for operating at an industrial site, in a warehouse or the like to manipulate, transfer or handle a load. For example, the industrial truck 10 can be a towing tractor 10a or a lift truck 10b, as illustrated in figure 2. The industrial truck 10 can be defined as a material handling truck.

These vehicles are used to move containers, pallets and the like inside warehouses, airports, ports or the like.

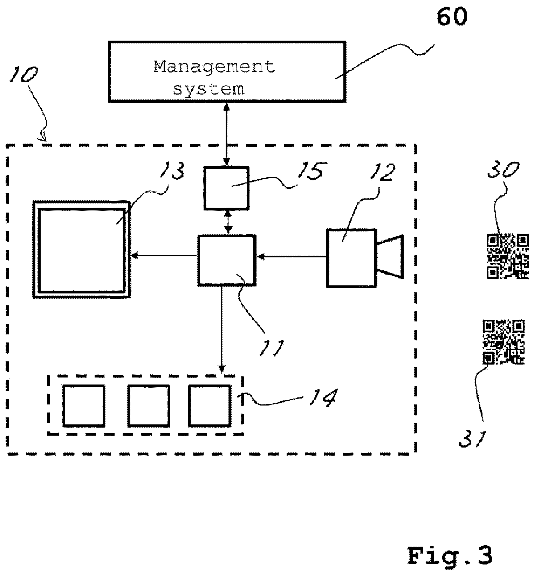

The industrial truck 10 has an autonomous/assisted driving function for approaching an apparatus 20 configured to interact with the industrial truck for operations of loading/unloading the industrial truck. The autonomous/assisted driving function can be controlled by a control unit 11 of the industrial truck (illustrated in figure 3). The autonomous/assisted driving function can be performed based on different inputs from the sensors of industrial trucks, such as video cameras, GPS receivers, LIDAR sensors and the like. The autonomous/assisted driving function can include a function for the navigation of the industrial truck 10 in the environment in which the industrial truck is active. The autonomous/assisted driving function also includes, in the present disclosure, a function of approaching the loading/unloading apparatus in order to precisely reach a target position to perform loading/unloading operations.

Preferably, the control of the autonomous/assisted driving function comprises controlling a movement of the industrial truck and/or ensuring that an operator is notified of information that assists in the control of the industrial truck. In particular, in the case of an assisted driving function, the user of the industrial truck is notified of information for assisting a driving operation; the notification of the information takes place by means of a user interface; the user interface preferably comprises a display device 13, as shown in figure 3. The display device 13 can display information that helps the user to perform a driving operation to approach a target position for loading/unloading in cooperation with the apparatus 20. In the case of an autonomous driving function, the control unit 11 directly controls the movement of the industrial truck, for example by sending control signals to a plurality of devices 14 (schematically shown in figure 3), such as a steering device, a motor, or a braking device of the industrial truck and the like.

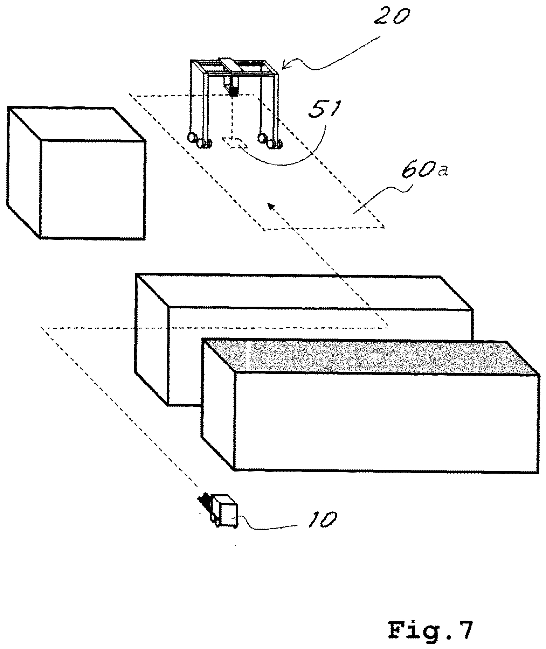

The industrial truck 10 can cooperate with a loading/unloading apparatus 20 to perform the loading/unloading operations. The loading/unloading apparatus 20 can be, for example, a crane, a gantry crane, a rubber-tyred self-propelled crane, a shelving unit, mobile shelving or the like. More in general, the apparatus 20 can be of the self-propelled type. Self-propelled here means an apparatus able to translate, for example on tyres, tracks or the like, through the use of a motor mounted on board the apparatus 20 or by means of an external traction drive. In the example illustrated in figure 1, the loading/unloading apparatus 20 is a rubber-tyred self-propelled crane. The loading/unloading apparatus 20 of the illustrated example comprises a movable trolley 24 (which enables horizontal movement of the loading/unloading platform) and a winch (not shown) mounted on the movable trolley 24 which enables the vertical movements of the spreader 25 supported by the truck 24. The spreader 25 is the actual "gripper" used to take hold of containers or, more in general, a load to be loaded onto/unloaded from the industrial truck 10. The movable trolley 24 is mounted on a crossbeam structure 23 so as to be movable along the crossbeam structure 23. The spreader 25 can be moved vertically with respect to the truck 24. The crossbeam structure 23 is supported by two vertical columns 22 of the apparatus 20, on opposite sides of the crossbeam structure 23. Each column 22 has wheels 26, 27 that enable the movement of the loading/unloading apparatus 20 in a direction perpendicular to the crossbeam structure 23. However, in combination with the industrial truck 10, other types of loading/unloading apparatus can also be used. For example, the loading/unloading apparatus 20 could be implemented as a mobile shelf-type platform of a warehouse. More in general, the loading/unloading apparatus 20 can include a movable part that is moved during the loading/unloading of the truck and a fixed part that is fixed during the loading/unloading of the truck. Furthermore, the entire loading/unloading apparatus 20 can be movable in a limited area; in the example in fig. 1, the columns 22 and the crossbeam structure 23 can be moved, for example, along a lane (the limited area, see the reference 60a in fig. 7) of the warehouse, thanks to the wheels 26, 27 and to a suitable driving system (not shown).

The industrial truck 10 includes at least one video camera 12 (schematically represented in figure 3) configured to capture images of an environment of the industrial truck. The at least one video camera is connected to the control unit 11 to provide the control unit with an image signal generated by the video camera and related to the captured images (see figure 3). The industrial truck 10 preferably includes a plurality of video cameras 12 (RGB, NIR and/or IR), mounted on the front part of the vehicle and/or on the sides thereof. The example in figure 1 shows two video cameras 12 mounted on the front part of the industrial truck 10, preferably on opposite sides of the industrial truck. However, the number of video cameras could also be greater and their positioning could also be different.

The industrial truck 10 can include a receiving section 15 configured to receive, from a remote processing device (or server) 60, an instruction for performing a loading/unloading operation. The instruction can include an indication of a loading/unloading apparatus in the warehouse where the industrial truck must load or unload a carried load. The warehouse may in fact include a plurality of loading/unloading apparatus, possibly with different configurations, arrangements and geometries. The receiving section 15 can be implemented as a transceiver for the transmission and reception of information towards/from a remote server 60. The remote server can be a management system of the industrial site/warehouse where the industrial truck 10 operates. The transceiver 15 can for example be a wireless transceiver of any known type, for example a Wi-Fi transceiver or the like.

The control unit 11 is configured to detect, based on the image signal received from the video camera 12, a plurality of optical markers 30, 31 in the environment. In particular, at least two optical markers can be used. The optical markers 30, 31 can be positioned or applied on the loading/unloading apparatus 20. More in general, the optical markers 30, 31 can be spatially associated with the loading/unloading apparatus 20, i.e. they can have a predetermined spatial relationship with the loading/unloading apparatus 20 or, more specifically, with a part of the loading/unloading apparatus 20 configured to engage with the load carried by the industrial truck. In the example in figure 1, the optical markers 30, 31 are positioned on the column 22 of the loading/unloading apparatus 20; however, as will be clear from the description that follows, the optical markers 30, 31 can be positioned on another portion of the loading/unloading apparatus 20. The optical markers 30 can be a fiducial marker; for example, the optical marker can be a OR code, an ArUco marker, an AprilTag, a WyCon marker, or a WyCode marker. The optical markers 30, 31 can include a variety of visual features. The features can include information associated with the optical marker, for example a relative position of a target position with respect to the optical markers. Furthermore, the optical marker is configured so as to enable a processing of images to determine the position of the optical marker with respect to the video camera that has captured it.

The control unit 11 is configured to determine a relative position of the industrial truck 10 with respect to each of the markers 30, 31 detected based on the image signal. For this determination the control unit 11 uses information relating to the position in which the video camera 12 is mounted on the industrial truck. The relative position of the industrial truck can refer a to any predetermined reference point on the industrial truck, for example a point corresponding to a central position of the material handling device of the industrial truck. The relative position of the industrial truck 10 with respect to the optical markers 30 can be determined by a software module of the control unit 11. The software module can include an image processing algorithm, known per se, to determine the relative position of the marker and/or to extract any additional information encoded in the optical marker, such as an identification and/or information relating to the use of the optical marker. For this purpose, the software can use known image processing algorithms and/or advanced automated/deep learning techniques. The software can use the calculation acceleration provided by a GPU, TPU and/or VPU. The size of the detected optical marker (for example in number of pixels or as a ratio of the pixels corresponding to the optical marker to the total number of pixels of the image) can be used, for example, to estimate the distance between the detected optical marker 30 (or 31) and the video camera 12. Furthermore, the arrangement of the visual features can be used to determine the orientation of the detected optical marker (for example, a direction normal to the surface on which the optical marker is positioned), with respect to the video camera capturing the optical marker.

The control unit 11 is further configured to acquire information relating to the optical marker 30 (or 31) that defines a target position, with respect to the optical markers 30, that the industrial truck 10 must reach to perform the loading/unloading operations.

According to one embodiment, the information relating to the optical marker is encoded in the optical marker 30 (or 31); in this case the control unit 11 is configured to extract the information from the image signal representing the optical marker as provided by the video camera. Each optical marker can include information relating to the target position with respect to the optical marker. Alternatively, one of the plurality of markers (the master) can include information relating to the target position for loading/unloading, whilst the other markers (friends) can include information relating to the position of the "master" marker.

Alternatively, the industrial truck 10 is configured to acquire information relating to the optical markers 30 (or 31), which defines a target position, with respect to the optical markers, that the industrial truck must reach, from an instruction, received from the management system 60 via the transceiver 15, for the performance of a loading/unloading operation; in this case, the information relating to the optical marker can be incorporated in the instruction for the performance of a loading/unloading operation received from the management system 60.

The information relating to the optical markers that define a target position, with respect to the optical markers, that the industrial truck must reach can be expressed, for example, as a vector indicating a direction with respect to the optical marker (for example with respect to a plane on which the marker is positioned) and a distance therefrom. The target position can be understood as a range of target positions, to consider that the loading/unloading apparatus 20 could have a movable part able to reach different positions of the industrial truck for the loading/unloading operations.

The information relating to the optical markers that defines a target position, with respect to the optical markers, that the industrial truck must reach may for example be one of the following:
a) an indication that the target position to be reached by the industrial truck is a position in a predetermined area and at a distance from the optical markers in a horizontal direction, or
b) an indication that the target position to be reached by the industrial truck is located in an area below the optical markers.

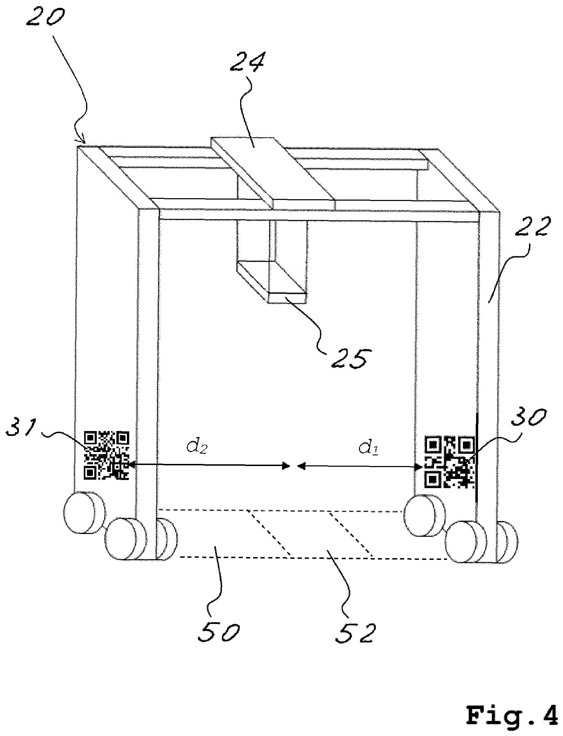

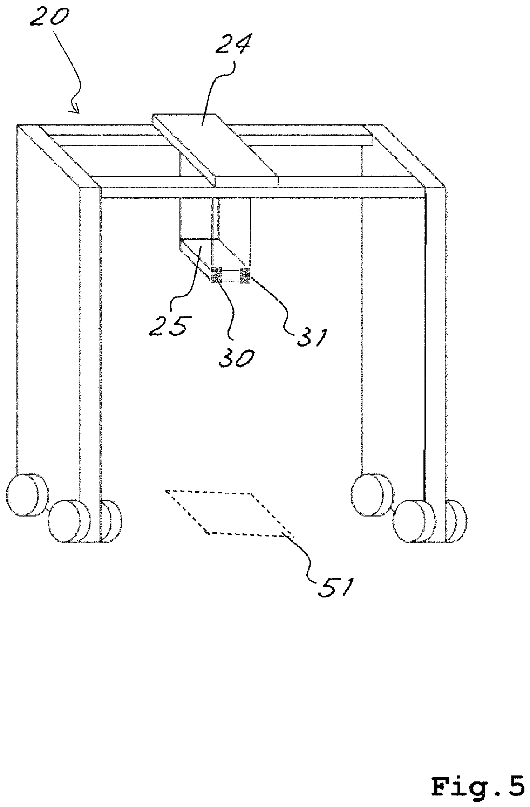

Case a) is represented by the example in figure 4. In this case, the optical markers 30 and 31 are positioned on a fixed part of the apparatus 20 which is fixed during the operation of loading/unloading the industrial truck 10, for example a column of the rubber-tyred self-propelled crane 20. In this case, the target position is determined by a distance d₁ from a first marker 30 and d₂ from a second marker 31 along an area (or a line) 50 below the crossbeam structure 23. The target position is indicated by the reference number 52;
Case b) is represented by the example in figure 5. The target position is indicated by the reference number 51. In this case, the optical markers 30 and 31 are positioned on the movable part of the apparatus 20, i.e. on the spreader 25 in the example of the embodiment. This arrangement is useful in the event that the lateral movement of the spreader 25 is expected to be limited, for example due to the presence of other vehicles or temporary restrictions in the use of the lanes below the crane 20, but is not known a priori; therefore, the horizontal position of the spreader 25 and of the target position with respect to the fixed part of the crane 20 cannot be configured ahead of time, for example in the management system 60.

The control unit 11 is configured to control the autonomous/assisted driving function based on the detected optical marker and on the information for reaching the target position. In particular, after having detected the optical marker 30, 31, the control unit 11 determines the relative position of the industrial truck 10 with respect to the marker 30, 31 based on the image signal received from the video camera 12. As it knows the target position with respect to the optical markers based on the acquired information associated with the optical marker and on the current position of the industrial truck with respect to the optical markers, the control unit 11 is in a condition to determine the movement of the industrial truck that is necessary to precisely reach the target position to perform the loading/unloading operation in cooperation with the loading/unloading apparatus 20. In particular, the control unit can independently determine a movement necessary to reach the target position based on each of the optical markers if the information relating to the optical marker includes information relating to the position of the target position with respect to the optical markers. Furthermore, the control unit can use the detection of more optical markers to increase the robustness of the estimation of the movement necessary to reach the target position. For example, the control unit could take an average of the movements necessary to reach the target position, which are separately calculated using the detection of each of the optical markers. Furthermore, even when one of the optical markers is not within view, it is possible in any case to determine the movement necessary to reach the target position based on the other detected optical markers. In this way, the control of the autonomous and/or assisted driving is improved and made more reliable.

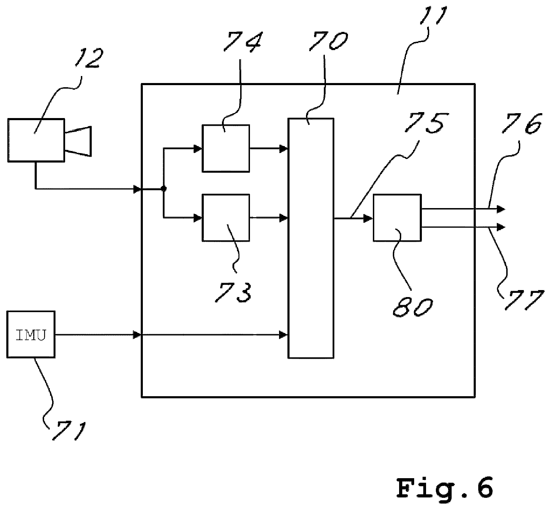

As shown in figure 6, the control unit 11 can comprise various modules for processing the input data and providing an estimate of the target position to be reached. Each module can be understood as a logic module which can be made with any known software and/or hardware implementation; the present disclosure is not limited to any specific software and/or hardware implementation.

According to one embodiment, the control unit 11 can include a marker detection module 73, intended to receive the image signal generated by the video camera 12 and able to provide data relating to the detection of one or more optical markers to a filter 70; the filter 70 is preferably made as an extended Kalman filter.

The marker detection module 73 can be made as a single software module able to detect a plurality of markers based on the image signal received from the video camera 12, or as a plurality of sub-modules operating in parallel. In particular, the marker detection module 73 is able to detect a plurality of markers included in a single video frame, i.e. in an image captured at a certain instant in time.

The extended Kalman filter 70 outputs a signal 75 relating to an estimate of the movement of the industrial truck that is necessary to reach the target position, for example the loading/unloading position; the signal relating to the estimate of the movement is provided to a control module 80 which, based on the estimate provided, generates control signals 76 and 77 related, respectively, to a speed and to a steering angle of the industrial truck. For example, the control module 80 could be of the PID ("proportional integrative derivative") type. The control signals 76, 77 can for example be provided to actuators 14 of the truck to impose a desired translation (steering angle and speed) in order to reach the target position. In particular, the filter 70 can provide an estimate of the movement required of the truck also when one of the optical markers 30, 31 is temporarily not within view, thus succeeding in estimating the target position based on another optical marker of the plurality of optical markers.

In a preferred embodiment, the signal generated by the video camera 12 can also be sent to a visual odometry module 74. The visual odometry module 74 generates information relating to the frame sequence of the video signal to enable a determination of the relative position of the industrial truck with respect to an initial reference position. The visual odometry module 74 can determine a relative position of the truck with respect to an initial reference position and emit it to the filter 70; the filter 70 can determine an estimate of the movement of the truck that is necessary to reach the target position also based on the relative position generated by the visual odometry module 74. In particular, if, temporarily, no optical marker is viewable by means of the video camera 12, the visual odometry can make up for the absence of an indication based on the optical marker. For example, the visual odometry could use, as the reference position, the last position obtained by the controller 11 based on an optical marker, making it possible to obtain a relatively precise estimate of the truck's position with respect to the target position even if, for a certain period of time, an optical marker is not viewable by the video camera during the approach. In this manner, even when all the optical markers are momentarily not within view, the control module 80 will still be able to continue controlling the approach to the target position.

In a preferred embodiment, the truck also includes an IMU (inertial measurement unit) 71 that provides its measurements to the filter 70. The filter 70 can thus generate an estimate of the movement of the industrial truck in order to reach the target position also based on the signal emitted by the IMU 71.

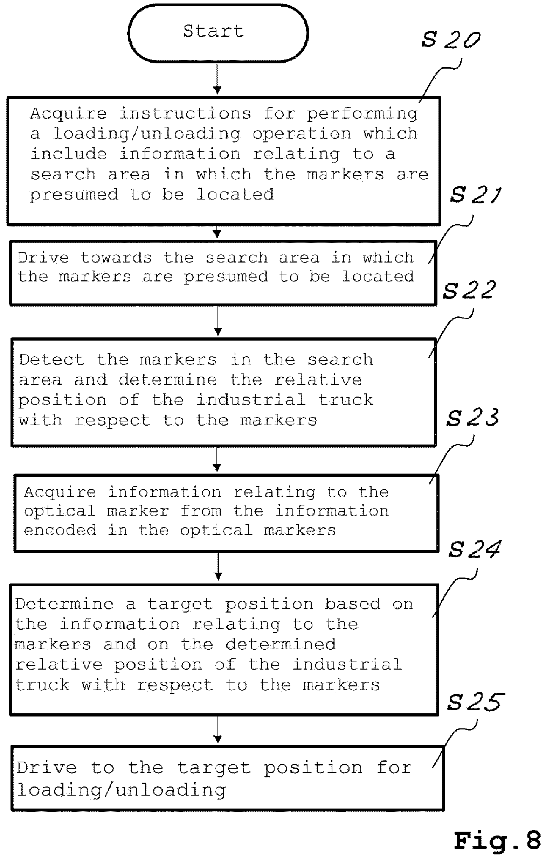

Making reference to figs. 7 and 8, a possible operation of the industrial truck 10 is described.

After the start of the procedure, in step S20 the industrial truck acquires an instruction, for example from the management system 60 via the transceiver 15, for performing a loading/unloading operation and including information relating to the optical markers that indicates the target position with respect to the optical marker. Preferably, the instruction includes an indication of the loading/unloading apparatus 20; the instruction can include an ID of the optical marker; the instruction preferably includes an indication of a search area 60a in which the markers 30-31 (and the loading/unloading apparatus 20) are presumed to be located. The instruction can include the ID of the loading/unloading apparatus 20. The search area 60a can be a limited area in which the loading/unloading apparatus 20 can move, for example a lane along which the rubber-tyred self-propelled crane 20 can move.

In step S21, the industrial truck 10 advances towards a search area in which the marker is presumed to be located; this step can be carried out autonomously using the autonomous driving function or manually with the assistance of the assisted driving function.

In step S22, the industrial truck 10 detects the markers in the search area 60 and determines the relative position of the industrial truck 10 with respect to the markers.

In step S23, the industrial truck 10 acquires, from the information encoded in the optical markers, the information relating to the optical markers that indicates the relative position of a target position to be reached for loading/unloading. Alternatively, the information relating to the optical markers could be acquired by the management system 60.

In step S24, the industrial truck 10 determines a target position to be reached for loading/unloading based on the information relating to the optical markers and on the determined relative position of the industrial truck with respect to the markers.

In step S25, the industrial truck 10 advances towards the target position for loading/unloading.

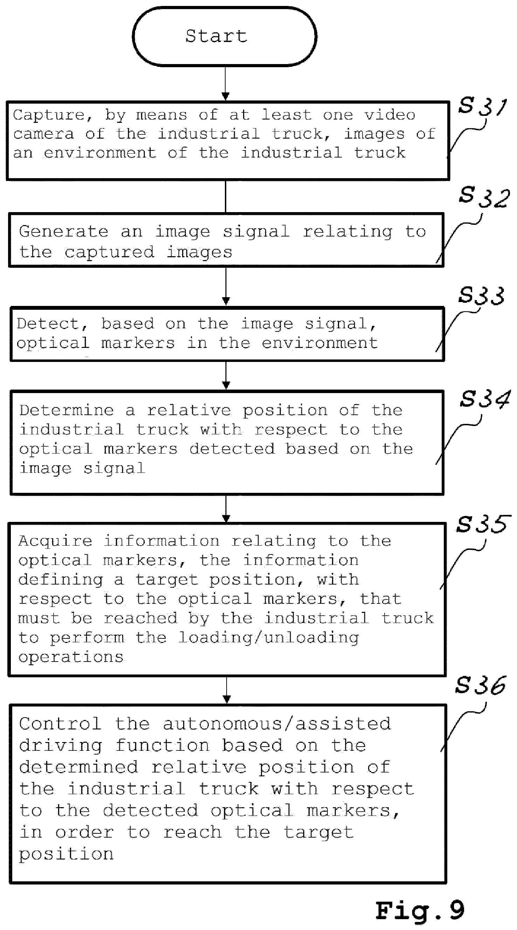

Making reference to fig. 9, another operation of the industrial truck is described. This procedure is carried out when the industrial truck is near the optical markers, so that the video camera can detect the markers.
Step S31: capture, by means of at least one video camera of the industrial truck, images of an environment of the industrial truck,
Step S32: generate an image signal relating to the captured images;
Step S33: detect, based on the image signal, an optical marker or a number of optical markers in the environment,
Step S34: determine a relative position of the industrial truck with respect to the optical marker (or optical markers, if a plurality of markers are detected) detected based on the image signal,
Step S35: acquire information relating to the optical marker(s), the information defining a target position, with respect to the optical marker (or optical markers, if a plurality of markers are detected), that must be reached by the industrial truck to perform the loading/unloading operations,
Step S36: control the autonomous/assisted driving function based on the determined relative position of the industrial truck with respect to the detected optical marker (or detected optical markers) and on the information relating to the optical marker(s), in order to reach the target position.

The present disclosure also relates to computer program which, if executed by a control unit of an industrial truck, ensures that the industrial truck carries out the above-described steps S31-S36.

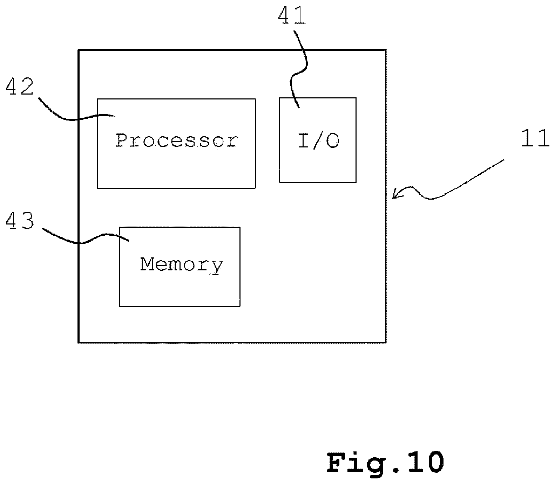

Fig. 10 shows a possible implementation of a control unit 11. In one embodiment, the control unit 11 includes at least one processor 42, a memory 43 and an I/O interface 41. The processor 42 is configured to execute instructions comprised in a computer program stored in the memory 43 so as to perform any of the functions of the control unit as described above.

The memory 43 is configured to store the computer program. During the execution of the instructions of the computer program, the processor 42 receives information from other elements of the system (for example from the receiving unit 15 or from the video camera 12) via the I/O interface 41 and outputs information to the other elements of the system via the interface I/O 41.

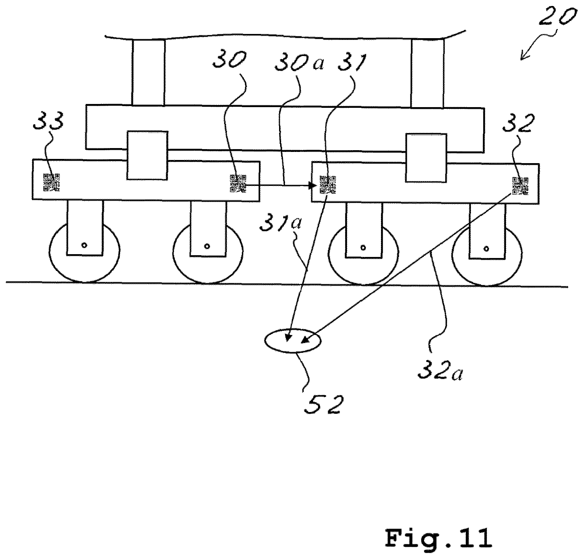

In one embodiment the loading/unloading apparatus 20 is self-propelled. Figure 11 shows an example of the application of optical markers to a self-propelled loading/unloading apparatus 20, for example a gantry crane to be used in a port area. In particular, it shows a column of the apparatus 20 which includes a plurality of wheels and locomotion means (not shown in the figures and made according to known techniques). The apparatus 20 can include a second column opposite the one shown in the figure. A plurality of optical markers are applied on the apparatus 20, for example four optical markers 30, 31, 32 and 33, spaced apart from each other, but another number of markers could also be provided for. The optical markers 30-33 are viewable from a single observation point, i.e. they can be captured by a video camera simultaneously, or they can be captured in a single image, or in a video frame. In one example, a distance between the optical markers can be at least 1 m, or at least 50 cm. The target position 52 is the position that must be reached by the industrial truck to perform loading/unloading in cooperation with the apparatus 20. The information relating to each optical marker 30-33 can include an indication of a position of another marker or an indication of the target position 52. For example, the information relating to the optical marker 30 ("friend" marker) can indicate a vector 30a (or a position) corresponding to another marker 31. The information relating to the marker 31 ("master" marker) can indicate a vector 31a (or a position) corresponding to the target position 52. The information relating to the marker 32 can indicate a vector 32a (or a position) corresponding to the target position 52.

As discussed above, the information relating to the optical marker can be encoded in the marker itself; an indication as to whether the indication refers to the position of another marker or to the target position to be reached can also be encoded in the marker. In one embodiment, the information relating to the marker can include both information relating to the position of another marker and information relating to the final target position, i.e. the position to be reached by the industrial truck.

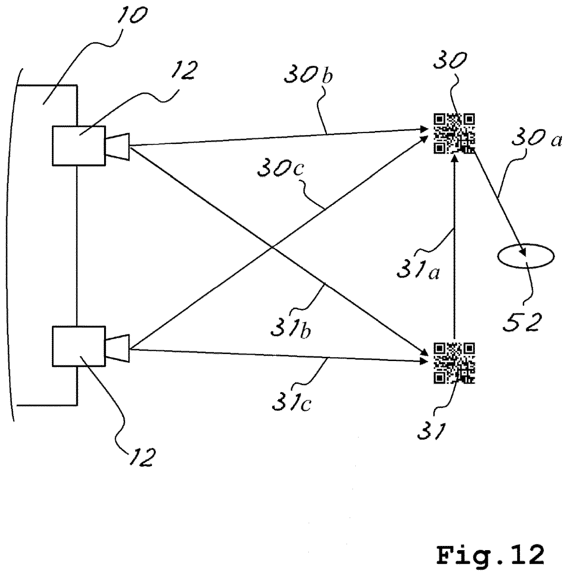

Fig. 12 shows an example of a multi-cam and multi-marker application, wherein the industrial truck 10 is provided with at least two video cameras 12. Two video cameras 12 are show in the example, but the number could also be higher, for example three or four. The video cameras 12 are mounted on the truck, spaced apart from each other, for example at a distance of at least 1 metre from each other. The video cameras 12 are mounted in such a way as to have fields of view that overlap with each other, so as to be able to capture a same optical marker 30, 31 simultaneously. For example, the video cameras 12 could have the same orientation parallel to the longitudinal axis of the industrial truck 10. In the example in the figure, two optical markers 30, 31 are shown which are simultaneously captured by each of the video cameras 12. The relative positions of the video cameras 12 with respect to the optical markers 30 are shown by the reference numbers 30b and 30c; the control unit is able to derive these relative positions based on a processing of the images that include the marker 30 and, based on these relative positions, is able to derive the relative position of the industrial truck 10 with respect to the marker 30 in a reliable manner. For example, when the visual field of one of the video cameras 12 is blocked off for any reason, the control unit is still able to derive the position of the truck with respect to the optical markers 30 based on the image signal of the other video camera 12. The relative positions of the video cameras 12 with respect to the optical markers 31 are shown by the reference numbers 31b and 31c. Thanks to the use of a plurality of video cameras and a plurality of optical markers that are simultaneously viewable by each of the video cameras 12, it is possible to provide a very robust, reliable autonomous/assisted driving system.

### Modifications and variations

There can be provided embodiments of the software of the examples presented herein as a computer program or software, such as, for example, one or more programs having instructions or sequences of instructions, included or stored in a manufactured article such as a machine-accessible or machine-readable medium, an instruction archive or a computer-readable storage device, each of which, in an example embodiment, can be non-transitory. The program or instructions on a non-transitory machine-accessible medium, on a machine-readable medium, in an instruction archive or in a computer-readable storage device can be used to program a computer system or another electronic device. The techniques described herein are not limited to any software configuration. They can have application in any IT or processing environment. Furthermore, it is common in the art to speak of software, in one form or another (for example, program, procedure, process, application, module, unit, logic and so on), as if it were carrying out an action or producing a result. Such expressions are none other than an abbreviated manner of affirming that the execution of the software by a processing system ensures that the processor performs an action to produce a result.

As used in this context, a control unit can include one or more processors (for example a single/multi-core CPU ("computing unit"), a microprocessor, a graphical processing unit (GPU), a video processing unit (VPU), a neural network processing unit (tensor processing unit or TPU), a combination of these or other known types of processing means. The control unit can be replaced by processing means or a processing unit.

According to a further feature of any of the above-described embodiments, the control unit 11 can be configured to perform, based on the image signal provided by the video camera 12, an object recognition function to recognize at least a part of the apparatus 20 configured to interact with the industrial truck in order to load and unload the truck. The control unit 11 is configured to preferentially attempt to detect the optical markers in a portion of the image captured by the camera that is determined based on the recognition of at least the part of the apparatus by means of the object recognition function.

Although various example embodiments of the present invention have been described, it is understood that they have been presented by way of non-limiting example. It is evident to the person skilled in the art or in the relevant techniques that, in this context, it is possible to introduce various modifications in the form and in the details. Therefore, the present invention should not be limited by any of the above-described example embodiments, but should rather be defined based solely on the following claims and the equivalents thereof.

## Claims

1. An industrial truck (10) configured to carry a load and having an autonomous/assisted driving function for approaching an apparatus (20) configured to interact with the industrial truck to perform an operation of loading a load onto the industrial truck and an operation of unloading the load from the industrial truck, the industrial truck comprising:
- a control unit configured to control the autonomous/assisted driving function;
- at least one video camera (12) configured to capture images of an environment of the industrial truck, the at least one video camera being connected to the control unit to provide the control unit with an image signal related to the captured images;
**characterized in that** the control unit is configured to detect, based on the image signal, at least two optical markers (30, 31) in the environment spaced apart from each other and included simultaneously in an image captured by the video camera, wherein the control unit is configured to determine a relative position of the industrial truck with respect to each of the optical markers detected based on the image signal,
wherein the control unit is further configured to acquire information relating to the optical markers, the information defining a target position (51, 52), with respect to at least one of the optical markers, that the industrial truck must reach to perform the loading and unloading operations, wherein the control unit is further configured to control the autonomous/assisted driving function based on the determined relative position of the industrial truck with respect to the detected optical markers and on the information relating to the optical markers, in order to reach the target position.

2. An industrial truck (10) according to claim 1, wherein the information relating to the optical markers defines a target position (51, 52), with respect to each of the optical markers, that the industrial truck must reach to perform the loading and unloading operations.

3. An industrial truck (10) according to claim 1 or 2, wherein the information relating to the optical markers is encoded in at least one of, or all of, the optical markers, wherein the control unit (11) is configured to extract the information from the image signal representing the optical markers as provided by the video camera.

4. An industrial truck (10) according to any of claims 1-3, wherein the information relating to the optical markers includes an indication of a predetermined loading and unloading position in which the industrial truck (10) can interact with the apparatus (20) to perform operations of loading and unloading the industrial truck, the predetermined loading and unloading position being indicated with respect to at least one of, or all of, the at least two optical markers.

5. An industrial truck (10) according to any of claims 1-4, wherein the industrial truck is a forklift truck.

6. An industrial truck (10) according to any of claims 1-5, wherein the information relating to the optical markers is an indication that the target position to be reached by the industrial truck is located in an area below at least one of, or all of, the optical markers and the control unit is configured to control the autonomous/assisted driving function based on the determined relative position of the industrial truck with respect to the detected optical markers and on the information relating to the optical markers, in order to reach the target position below at least one of, or all of, the optical markers.

7. An industrial truck (10) according to any of claims 1-6, wherein the control unit (11) is configured to perform, based on the image signal provided by the video camera (12), an object recognition function to recognize at least a part of the apparatus (20) configured to interact with the industrial truck in order to load and unload the truck, wherein the control unit is configured to preferentially attempt to detect the optical markers in a portion of the image captured by the video camera that is determined based on the recognition of at least the part of the apparatus by means of the object recognition function.

8. An industrial truck (10) according any of claims 1-7, comprising at least two video cameras (12), each configured to capture images of an environment of the industrial truck and each connected to the control unit to provide the control unit with a respective image signal related to the captured images,
wherein the at least two video cameras (12) have respective fields of view that overlap with each other so as to be able to capture a same optical marker simultaneously,
wherein the control unit is configured to detect, jointly based on each of the image signals, the at least two optical markers in the environment.

9. An industrial truck (10) according any of claims 1-8, wherein, when one or more optical markers are not viewable by the video camera, the control unit is configured to estimate a movement of the industrial truck that is necessary to reach the target position based on the detection of a number of optical markers that is less than the total number of the at least two optical markers.

10. An industrial truck (10) according any of claims 1-9, wherein the control unit is configured to estimate a movement of the industrial truck that is necessary to reach the target position based on visual odometry and/or based on an input from an inertial measurement unit, IMU, when all the optical markers are not viewable by the video camera.

11. A system including the industrial truck (10) of any of claims 1-10 and an apparatus (20) of any of claims 14 or 15 configured to interact with the industrial truck to perform an operation of loading a load onto the industrial truck and an operation of unloading a load from the industrial truck, wherein the at least two optical markers are associated with the apparatus (20).

12. A system according to claim 11, wherein the apparatus is movable and wherein each of the at least two optical markers (30, 31) are fixed to the apparatus (20) with a predetermined mutual spatial relationship.

13. A system according to claim 11 or 12, wherein the apparatus (20) includes a fixed part that is fixed during the loading and unloading of the industrial truck and a movable part (25) that is movably connected to the fixed part, the movable part being configured to load or unload the industrial truck, wherein at least some of the optical markers are located either on the fixed part and/or on the movable part of the apparatus.

14. An apparatus (20) configured to interact with an industrial truck to perform an operation of loading a load onto the industrial truck and an operation of unloading a load from the industrial truck, the apparatus being self-propelled and comprising a plurality of optical markers (30-33) applied to an external surface of the apparatus and spaced apart from each other,
wherein said optical markers are configured to be simultaneously viewable from a single observation point and to be detected by a video camera of the industrial truck to enable the industrial truck to reach a target position with respect to the optical markers,
wherein, when the industrial truck is in the target position, the apparatus is configured to perform an operation of loading and unloading the industrial truck.

15. An apparatus (20) according to claim 14, wherein the apparatus (20) includes a first part intended to be fixed during the loading and unloading of the industrial truck and a movable part that is connected in a movable manner to the first part, the movable part being configured to load or unload the industrial truck, wherein the plurality of optical markers (30-33) are fixed to the first part.

## Patentansprüche

1. Industriefahrzeug (10), konfiguriert zum Tragen einer Last und mit einer autonomen/unterstützten Fahrfunktion zum Annähern an eine Vorrichtung (20), die konfiguriert ist zum Interagieren mit dem Industriefahrzeug, um einen Vorgang des Ladens einer Last auf das Industriefahrzeug und einen Vorgang des Entladens der Last von dem Industriefahrzeug auszuführen, wobei das Industriefahrzeug umfasst:
eine Steuereinheit konfiguriert zum Steuern der autonomen/unterstützten Fahrfunktion;
mindestens eine Videokamera (12) konfiguriert zum Aufnehmen von Bildern einer Umgebung des Industriefahrzeugs, wobei die mindestens eine Videokamera mit der Steuereinheit verbunden ist, um der Steuereinheit ein auf die aufgenommenen Bilder bezogenes Bildsignal bereitzustellen;
**dadurch gekennzeichnet, dass** die Steuereinheit konfiguriert ist zum Detektieren, auf Grundlage des Bildsignals, von mindestens zwei optischen Markierungen (30, 31) in der Umgebung, die voneinander beabstandet sind und gleichzeitig in einem von der Videokamera aufgenommenen Bild enthalten sind, wobei die Steuereinheit konfiguriert ist zum Bestimmen einer relativen Position des Industriefahrzeugs in Bezug auf jede der auf Grundlage des Bildsignals detektierten optischen Markierungen,
wobei die Steuereinheit ferner konfiguriert ist zum Erfassen von auf die optischen Markierungen bezogener Information, wobei die Information eine Zielposition (51, 52) in Bezug auf mindestens eine der optischen Markierungen definiert, die das Industriefahrzeug erreichen muss, um die Be- und Entladevorgänge auszuführen, wobei die Steuereinheit ferner konfiguriert ist zum Steuern der autonomen/unterstützten Fahrfunktion auf Grundlage der bestimmten relativen Position des Industriefahrzeugs in Bezug auf die erfassten optischen Markierungen und auf die auf die optischen Markierungen bezogene Information, um die Zielposition zu erreichen.

2. Industriefahrzeug (10) gemäß Anspruch 1, wobei die auf die optischen Markierungen bezogene Information eine Zielposition (51, 52) in Bezug auf jede der optischen Markierungen definiert, die das Industriefahrzeug erreichen muss, um die Be- und Entladevorgänge auszuführen.

3. Industriefahrzeug (10) gemäß Anspruch 1 oder 2, wobei die auf die optischen Markierungen bezogene Information in mindestens einer der optischen Markierungen oder in allen optischen Markierungen kodiert ist, wobei die Steuereinheit (11) konfiguriert ist zum Extrahieren der Information aus dem Bildsignal, das die optischen Markierungen darstellt, wie es von der Videokamera bereitgestellt wird.

4. Industriefahrzeug (10) gemäß einem der Ansprüche 1 bis 3, wobei die auf die optischen Markierungen bezogene Information eine Angabe einer vorbestimmten Be- und Entladeposition enthält, in der das Industriefahrzeug (10) mit der Vorrichtung (20) interagieren kann, um Vorgänge des Be- und Entladens des Industriefahrzeugs durchzuführen, wobei die vorbestimmte Be- und Entladeposition in Bezug auf mindestens eine oder alle der mindestens zwei optischen Markierungen angegeben wird.

5. Industriefahrzeug (10) gemäß einem der Ansprüche 1-4, wobei das Industriefahrzeug ein Gabelstapler ist.

6. Industriefahrzeug (10) gemäß einem der Ansprüche 1 bis 5, wobei die auf die optischen Markierungen bezogene Information eine Angabe ist, dass sich die von dem Industriefahrzeug zu erreichende Zielposition in einem Bereich unterhalb mindestens einer oder allen der optischen Markierungen befindet, und die Steuereinheit konfiguriert ist zum Steuern der autonomen/unterstützten Fahrfunktion auf Grundlage der bestimmten relativen Position des Industriefahrzeugs in Bezug auf die detektierten optischen Markierungen und auf die auf die optischen Markierungen bezogene Information, um die Zielposition unterhalb mindestens einer oder allen der optischen Markierungen zu erreichen.

7. Industriefahrzeug (10) gemäß einem der Ansprüche 1 bis 6, wobei die Steuereinheit (11) konfiguriert ist zum Ausführen, auf Grundlage des von der Videokamera (12) bereitgestellten Bildsignals, einer Objekterkennungsfunktion, um zumindest einen Teil der Vorrichtung (20) zu erkennen, die konfiguriert ist zum Interagieren mit dem Industriefahrzeug, um das Fahrzeug zu be- und entladen, wobei die Steuereinheit konfiguriert ist zum vorzugsweisen Versuchen, die optischen Markierungen in einem Abschnitt des von der Videokamera aufgenommenen Bildes zu erkennen, der auf Grundlage der Erkennung von zumindest dem Teil der Vorrichtung mittels der Objekterkennungsfunktion bestimmt wird.

8. Industriefahrzeug (10) gemäß einem der Ansprüche 1-7, umfassend mindestens zwei Videokameras (12), die jeweils konfiguriert sind zum Aufnehmen von Bildern einer Umgebung des Industriefahrzeugs und die jeweils mit der Steuerung verbunden sind, um der Steuereinheit ein entsprechendes Bildsignal bereitzustellen, das sich auf die aufgenommenen Bilder bezieht,
wobei die mindestens zwei Videokameras (12) jeweilige Sichtfelder haben, die sich gegenseitig überlappen, so dass eine gleiche optische Markierung gleichzeitig aufgenommen werden kann,
wobei die Steuereinheit konfiguriert ist zum Detektieren, gemeinsam auf Grundlage jedes der Bildsignale, der mindestens zwei optischen Markierungen in der Umgebung.

9. Industriefahrzeug (10) gemäß einem der Ansprüche 1-8, wobei, wenn eine oder mehrere optische Markierungen für die Videokamera nicht sichtbar sind, die Steuereinheit konfiguriert ist zum Schätzen einer Bewegung des Industriefahrzeugs, die notwendig ist, um die Zielposition zu erreichen, auf Grundlage der Detektion einer Anzahl optischer Markierungen, die geringer ist als die Gesamtzahl der mindestens zwei optischen Markierungen.

10. Industriefahrzeug (10) gemäß einem der Ansprüche 1-9, wobei die Steuereinheit konfiguriert ist zum Schätzen einer Bewegung des Industriefahrzeugs, die notwendig ist, um die Zielposition zu erreichen, auf Grundlage visueller Odometrie und/oder auf Grundlage einer Eingabe von einer Inertialmesseinheit, IMU, wenn alle der optischen Markierungen für die Videokamera nicht sichtbar sind.

11. System, umfassend das Industriefahrzeug (10) gemäß einem der Ansprüche 1-10 und eine Vorrichtung (20) gemäß einem der Ansprüche 14 oder 15, die konfiguriert ist, zum Interagieren mit dem Industriefahrzeug, um einen Vorgang des Ladens einer Last auf das Industriefahrzeug und einen Vorgang des Entladens einer Last von dem Industriefahrzeug auszuführen, wobei die mindestens zwei optischen Markierungen mit der Vorrichtung (20) assoziiert sind.

12. System gemäß Anspruch 11, wobei die Vorrichtung beweglich ist und wobei jede der mindestens zwei optischen Markierungen (30, 31) an der Vorrichtung (20) mit einer vorbestimmten gegenseitigen räumlichen Beziehung fixiert ist.

13. System gemäß Anspruch 11 oder 12, wobei die Vorrichtung (20) einen fixierten Teil, der während des Be- und Entladens des Industriefahrzeugs fixiert ist, und einen beweglichen Teil (25) enthält, der beweglich mit dem fixierten Teil verbunden ist, wobei der bewegliche Teil zum Be- oder Entladen des Industriefahrzeugs konfiguriert ist, wobei sich zumindest einige der optischen Markierungen entweder auf dem fixierten Teil und/oder auf dem beweglichen Teil der Vorrichtung befinden.

14. Vorrichtung (20), die konfiguriert ist zum Interagieren mit einem Industriefahrzeug, um einen Vorgang des Ladens einer Last auf das Industriefahrzeug und einen Vorgang des Entladens einer Last von dem Industriefahrzeug auszuführen, wobei die Vorrichtung selbstangetrieben ist und eine Vielzahl von optischen Markierungen (30-33) umfasst, die auf einer äußeren Oberfläche der Vorrichtung angebracht und voneinander beabstandet sind,
wobei die besagten optischen Markierungen konfiguriert sind, um gleichzeitig von einem einzigen Beobachtungspunkt aus sichtbar zu sein und von einer Videokamera des Industriefahrzeugs detektiert zu werden, um es dem Industriefahrzeug zu ermöglichen, eine Zielposition in Bezug auf die optischen Markierungen zu erreichen,
wobei, wenn sich das Industriefahrzeug in der Zielposition befindet, die Vorrichtung konfiguriert ist zum Ausführen eines Vorgangs des Be- und Entladens des Industriefahrzeugs.

15. Vorrichtung (20) gemäß Anspruch 14, wobei die Vorrichtung (20) einen ersten Teil, der dazu bestimmt ist, während des Be- und Entladens des Industriefahrzeugs fixiert zu sein, und einen beweglichen Teil enthält, der in einer beweglichen Weise mit dem ersten Teil verbunden ist, wobei der bewegliche Teil konfiguriert ist zum Be- oder Entladen des Industriefahrzeugs, wobei die Vielzahl von optischen Markierungen (30-33) an dem ersten Teil fixiert sind.

## Revendications

1. Chariot industriel (10) configuré pour transporter une charge et ayant une fonction de conduite autonome/assistée pour s'approcher d'un appareil (20) configuré pour interagir avec le chariot industriel afin d'effectuer une opération de chargement d'une charge sur le chariot industriel et une opération de déchargement de la charge du chariot industriel, le chariot industriel comprenant :
- une unité de commande configurée pour commander la fonction de conduite autonome/assistée ;
- au moins une caméra vidéo (12) configurée pour capturer des images d'un environnement du chariot industriel, la au moins une caméra vidéo étant connectée à l'unité de commande pour fournir à l'unité de commande un signal d'image lié aux images capturées ;
**caractérisé en ce que** l'unité de commande est configurée pour détecter, sur la base du signal d'image, au moins deux marqueurs optiques (30, 31) dans l'environnement, espacés les uns des autres et inclus simultanément dans une image capturée par la caméra vidéo, dans lequel l'unité de commande est configurée pour déterminer une position relative du chariot industriel par rapport à chacun des marqueurs optiques détectés sur la base du signal d'image,
dans lequel l'unité de commande est en outre configurée pour acquérir des informations relatives aux marqueurs optiques, les informations définissant une position cible (51, 52), par rapport à au moins un parmi les marqueurs optiques, que le chariot industriel doit atteindre pour effectuer les opérations de chargement et de déchargement, dans lequel l'unité de commande est en outre configurée pour commander la fonction de conduite autonome/assistée sur la base de la position relative déterminée du chariot industriel par rapport aux marqueurs optiques détectés et des informations relatives aux marqueurs optiques, afin d'atteindre la position cible.

2. Chariot industriel (10) selon la revendication 1, dans lequel les informations relatives aux marqueurs optiques définissent une position cible (51, 52), par rapport à chacun des marqueurs optiques, que le chariot industriel doit atteindre pour effectuer les opérations de chargement et de déchargement.

3. Chariot industriel (10) selon la revendication 1 ou 2, dans lequel les informations relatives aux marqueurs optiques sont codées dans au moins l'un des marqueurs optiques, ou dans tous les marqueurs optiques, dans lequel l'unité de commande (11) est configurée pour extraire les informations du signal d'image représentant les marqueurs optiques fourni par la caméra vidéo.

4. Chariot industriel (10) selon l'une quelconque des revendications 1 à 3, dans lequel les informations relatives aux marqueurs optiques comprennent une indication d'une position de chargement et de déchargement prédéterminée dans laquelle le chariot industriel (10) peut interagir avec l'appareil (20) pour effectuer des opérations de chargement et de déchargement du chariot industriel, la position de chargement et de déchargement prédéterminée étant indiquée par rapport à au moins l'un ou à tous les au moins deux marqueurs optiques.

5. Chariot industriel (10) selon l'une quelconque des revendications 1 à 4, dans lequel le chariot industriel est un chariot élévateur.

6. Chariot industriel (10) selon l'une quelconque des revendications 1 à 5, dans lequel les informations relatives aux marqueurs optiques sont une indication que la position cible à être atteinte par le chariot industriel est située dans une zone située en dessous d'au moins l'un, ou de tous les marqueurs optiques et l'unité de commande est configurée pour commander la fonction de conduite autonome/assistée sur la base de la position relative déterminée du chariot industriel par rapport aux marqueurs optiques détectés et des informations relatives aux marqueurs optiques, afin d'atteindre la position cible située en dessous d'au moins l'un, ou de tous les marqueurs optiques.

7. Chariot industriel (10) selon l'une quelconque des revendications 1 à 6, dans lequel l'unité de commande (11) est configurée pour exécuter, sur la base du signal d'image fourni par la caméra vidéo (12), une fonction de reconnaissance d'objet pour reconnaître au moins une partie de l'appareil (20) configuré pour interagir avec le chariot industriel afin de charger et décharger le chariot, dans lequel l'unité de commande est configurée pour tenter de préférence de détecter les marqueurs optiques dans une partie de l'image capturée par la caméra vidéo qui est déterminée sur la base de la reconnaissance d'au moins la partie de l'appareil au moyen de la fonction de reconnaissance d'objet.

8. Chariot industriel (10) selon l'une quelconque des revendications 1 à 7, comprenant au moins deux caméras vidéo (12), chacune étant configurée pour capturer des images d'un environnement du chariot industriel et chacune étant connectée à l'unité de commande pour fournir à l'unité de commande un signal d'image respectif lié aux images capturées,
dans lequel les au moins deux caméras vidéo (12) ont des champs de vision respectifs qui se chevauchent afin de pouvoir capturer simultanément un même marqueur optique,
dans lequel l'unité de commande est configurée pour détecter, conjointement sur la base de chacun des signaux d'image, les au moins deux marqueurs optiques dans l'environnement.

9. Chariot industriel (10) selon l'une quelconque des revendications 1 à 8, dans lequel, lorsqu'un ou plusieurs marqueurs optiques ne sont pas visibles par la caméra vidéo, l'unité de commande est configurée pour estimer un mouvement du chariot industriel qui est nécessaire pour atteindre la position cible sur la base de la détection d'un nombre de marqueurs optiques qui est inférieur au nombre total des au moins deux marqueurs optiques.

10. Chariot industriel (10) selon l'une quelconque des revendications 1 à 9, dans lequel l'unité de commande est configurée pour estimer un mouvement du chariot industriel qui est nécessaire pour atteindre la position cible sur la base d'une odométrie visuelle et/ou sur la base d'une entrée provenant d'une unité de mesure inertielle, IMU, lorsque tous les marqueurs optiques ne sont pas visibles par la caméra vidéo.

11. Système comprenant le chariot industriel (10) selon l'une quelconque des revendications 1 à 10 et un appareil (20) selon l'une quelconque des revendications 14 ou 15 configuré pour interagir avec le chariot industriel afin d'effectuer une opération de chargement d'une charge sur le chariot industriel et une opération de déchargement d'une charge du chariot industriel, dans lequel les au moins deux marqueurs optiques sont associés à l'appareil (20).

12. Système selon la revendication 11, dans lequel l'appareil est mobile et dans lequel chacun des au moins deux marqueurs optiques (30, 31) est fixé à l'appareil (20) avec une relation spatiale mutuelle prédéterminée.

13. Système selon la revendication 11 ou 12, dans lequel l'appareil (20) comprend une partie fixe qui est fixée pendant le chargement et le déchargement du chariot industriel et une partie mobile (25) qui est reliée de manière mobile à la partie fixe, la partie mobile étant configurée pour charger ou décharger le chariot industriel, dans lequel au moins certains des marqueurs optiques sont situés soit sur la partie fixe et/ou sur la partie mobile de l'appareil.

14. Appareil (20) configuré pour interagir avec un chariot industriel afin d'effectuer une opération de chargement d'une charge sur le chariot industriel et une opération de déchargement d'une charge du chariot industriel, l'appareil étant automoteur et comprenant une pluralité de marqueurs optiques (30-33) appliqués sur une surface externe de l'appareil et espacés les uns des autres,
dans lequel lesdits marqueurs optiques sont configurés pour être visibles simultanément à partir d'un seul point d'observation et pour être détectés par une caméra vidéo du chariot industriel afin de permettre au chariot industriel d'atteindre une position cible par rapport aux marqueurs optiques,
dans lequel, lorsque le chariot industriel se trouve dans la position cible, l'appareil est configuré pour effectuer une opération de chargement et de déchargement du chariot industriel.

15. Appareil (20) selon la revendication 14, dans lequel l'appareil (20) comprend une première partie destinée à être fixée pendant le chargement et déchargement du chariot industriel et une partie mobile qui est reliée de manière mobile à la première partie, la partie mobile étant configurée pour charger ou décharger le chariot industriel, dans lequel la pluralité de marqueurs optiques (30-33) sont fixés à la première partie.
